# EUROPÄISCHE PATENTSCHRIFT

(11) **EP 0 986 449 B1**
(45) Veröffentlichungstag und Bekanntmachung des Hinweises auf die Patenterteilung: **05.12.2001**
(21) Anmeldenummer: 97928148.2
(22) Anmeldetag: 06.06.1997
(51) Int. Cl.: B23P 15/00, B21D 51/24, F15B 1/14, F16L 55/05

(54) **VERFAHREN ZUM HERSTELLEN EINES MEMBRANSPEICHERS**
METHOD FOR PRODUCING A MEMBRANE RESERVOIR
PROCEDE DE PRODUCTION D'UN RESERVOIR A MEMBRANE

(43) Veröffentlichungstag der Anmeldung: 22.03.2000
(73) Patentinhaber: HYDAC TECHNOLOGY GMBH, D-66280 Sulzbach (DE)
(72) Erfinder: WEBER, Norbert, D-66280 Sulzbach (DE); KLAUK, Bernd, D-66125 Dudweiler (DE)
(74) Vertreter: Bartels, Martin Erich Arthur
(86) Internationale Anmeldenummer: EP9702939
(87) Internationale Veröffentlichungsnummer: WO9855258

(56) Entgegenhaltungen:
- EP-A- 0 019 033
- DE-A- 2 331 477
- DE-A- 4 131 524
- FR-A- 2 301 712
- GB-A- 1 433 522
- US-A- 4 077 100
- US-A- 4 098 297
- US-A- 4 288 894

## Beschreibung

Die Erfindung bezieht sich auf ein Verfahren zum Herstellen eines Membranspeichers mit einem Speichergehäuse aus Metall und mit einem elastisch nachgiebigen Trennglied, insbesondere in Form einer Membran.

In der US 4 288 894 ist ein Verfahren dieser Art als bekannt aufgezeigt, das folgende Schritte beinhaltet:
a) in Drehung versetzen eines Rohrstückes um dessen Längsachse,
b) Vorwärmen eines Endes des Rohrstückes für eine Umformung durch Warmeinziehen mittels Rollieren,
c) Rollieren des Rohrstückendes durch Zustellen zumindest eines Drückswerkzeuges bei auf dessen Angriffsbereich gerichteter gezielter Erhitzung auf die Umformtemperatur zur Bildung eines Bodens am Rohrstückende mit einer Öffnung an einem nach außen gestülpten Kragen,
d) Einsetzen einer mittels eines zugehörigen Spannringes gehaltenen Membrananordnung und
e) Bilden eines zweiten Bodens am zweiten Ende des Rohrstückes entsprechend den Schritten b) und c).

Aufgabe der Erfindung ist es, ein derartiges Verfahren dahingehend zu verbessern, daß die Herstellung von Membranspeichern hoher Güte besonders rationell und kostengünstig ermöglicht wird. Gelöst ist die Aufgabe erfindungsgemäß durch ein Verfahren mit den im Anspruch 1 angegebenen Merkmalen.

Danach besteht ein besonders wesentlicher Unterschied des erfindungsgemäßen Verfahrens gegenüber dem Stand der Technik darin, daß im Angriffsbereich des Drückwerkzeuges die Arbeitstemperatur während der Umformung gemessen und auf einen Wert für optimale Umformung geregelt wird. Ohne Schädigung des Materialgefüges lassen sich dadurch hohe Umformungsgrade erreichen, wodurch die erstrebte rationelle und kostengünstige Herstellung der Membranspeicher ermöglicht wird. Außerdem werden durch die gewährleistete schonende Umformung unkontrollierte Formänderungen vermieden und gleichzeitig eine hohe Oberflächengüte in den verformten Bereichen gewährleistet.

Die als Sitz für eine in das Speichergehäuse einzubauende Membrananordnung dienende innere Ringnut kann im mittleren Bereich des Rohrstückes durch Erhitzen dieses Bereiches ebenfalls durch Rollieren ausgebildet werden. Die Bildung der Ringnut kann jedoch auch durch spanende Bearbeitung erfolgen. In allen Fällen ergibt sich nach der Bildung des zweiten, das Speichergehäuse abschließenden Bodens beim Abkühlen des Rohrstückes an der Ringnut eine Schrumpfverbindung mit dem Spannring der Membrananordnung, wodurch diese in ihrer Einbaulage festgelegt wird.

Nachstehend ist die Erfindung anhand eines in der Zeichnung dargestellten Ausführungsbeispiels im einzelnen erläutert. Es zeigen:
- Fig. 1: einen Längsschnitt des Endes eines Rohrstückes in unverformtem Zustand;
- Fig. 2: einen Längsschnitt eines Rohrstückes mit einem am einen Ende durch Warmeinziehen ausgebildeten Boden mit einer Öffnung an einem Kragen;
- Fig. 3: einen Längsschnitt des Rohrstückes von Fig. 2 nach Ausbilden einer inneren Ringnut im mittleren Bereich;
- Fig. 4: einen Längsschnitt des Rohrstückes von Fig. 2 und 3 nach Einsetzen einer Membrananordnung und Bearbeiten des Kragens am Boden, wobei zwei Formgebungen des Kragens gezeigt sind, und
- Fig. 5: einen Längsschnitt des durch Ausbilden eines zweiten Bodens zum geschlossenen Speichergehäuse geformten Rohrstückes, wobei für einen am zweiten Boden ausgebildeten Kragen zwei unterschiedliche Formgebungen gezeigt sind.

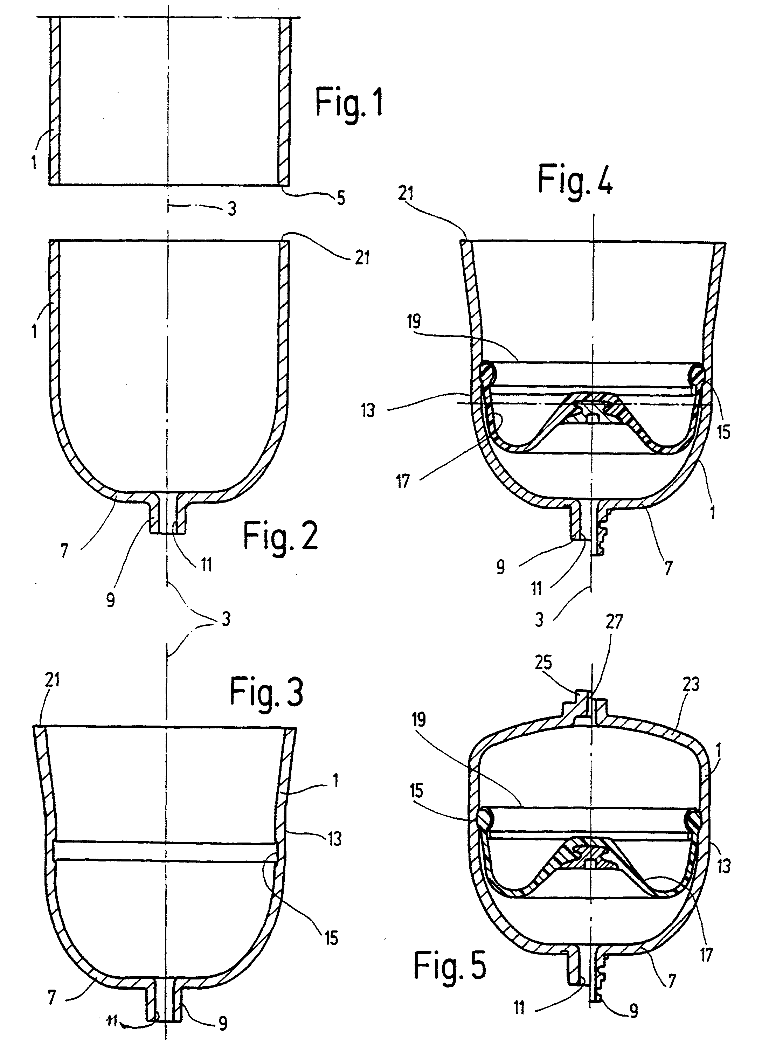

Fig. 1 zeigt das freie Ende eines Rohrstückes 1, das auf einer Dreh- oder Drückbank (nicht gezeigt) gespannt ist und um seine Längsachse 3 gedreht wird. Nach Erwärmen des Rohrstückes 1 im Bereich seines freien Rohrendes 5 mittels Gasflamme oder vorzugsweise induktiver Erhitzung erfolgt in an sich bekannter Weise eine Warmumformung mittels Rollieren oder Drücken, wobei das offene Rohrende 5 zu einem geschlossenen Boden 7 mit einem nach außen umgestülpten Kragen 9 umgeformt wird. Während dieser Umformung wird die Arbeitstemperatur im Angriffsbereich des Drückwerkzeuges oder der Drückwerkzeuge berührungslos gemessen und auf einen Wert geregelt, bei dem ein hoher Umformungsgrad bei möglichst geringer Schädigung des Werkstoffgefüges erreicht wird. Fig. 2 zeigt die Form des Rohrstückes 1 mit dem so gebildeten Boden 7, der das Rohrstück 1 am Rohrende 5 einseitig bis auf eine Anschlußöffnung 11 am Kragen 9 verschließt.

Die Messung der Temperatur im Bereich der Bearbeitung ermöglicht es auch, zusätzliche temperaturbeeinflussende Gegebenheiten zu berücksichtigen, insbesondere Auswirkungen der Reibung zwischen Drückrolle/n und Werkstück, der Umformgeschwindigkeit usw., so daß optimale Arbeitsbedingungen eingehalten werden können, was zu guten Gefügeeigenschaften und einer hohen Oberflächengüte führt, so daß eine Nachbearbeitung der bearbeiteten Bereiche in vielen Fällen unterbleiben kann.

Als weiterer Bearbeitungsschritt nach Umspannen des Rohrstückes 1 wird in dessen mittlerem Bereich 13 eine innere, umlaufende Ringnut 15 (siehe insbesondere Fig. 3) ausgebildet. Dies kann auf der Dreh- oder Drückbank entweder ebenfalls durch spanlose Verformung, also Roilieren mittels eines Drückwerkzeuges bei geeigneter Verformungstemperatur, oder spanabhebend durch Ausdrehen erfolgen. Die Ringnut 15 bildet einen Sitz für eine Membrananordnung 17 (siehe Fig. 4 und 5), deren an einem metallischen Spannring 19 anliegender Randwulst in der Ringnut 15 aufgenommen wird. Um das Einsetzen der Membrananordnung 17 zu erleichtern, wird das Rohrstück 1 an seinem noch offenen Rohrende 21 beim Bilden der Ringnut 15 oder daran anschließend geringfügig aufgeweitet, siehe Fig. 3 und 4.

Nach dem Einsetzen der Membrananordnung 17 wird das Rohrende 21 zur Bildung eines zweiten Bodens 23, auf die gleiche Weise wie zuvor für die Bildung des Bodens 7 beschrieben, verschlossen, so daß ein geschlossenes Speichergehäuse entsteht. In entsprechender Weise wird am Boden 23 auch ein nach außen umgestülpter Kragen 25 mit Kragenöffnung 27 ausgebildet. Das nach dem Warmeinziehen des Bodens 23 erfolgende Abkühlen führt zu einer Schrumpfung auch im mittleren Bereich 13, d.h. im Bereich der Ringnut 15, wodurch sich eine feste Verankerung der Membrananordnung 17 in Zusammenwirkung zwischen Ringnut 15 und Spannring 19 ergibt. Alternativ hierzu kann vorgesehen sein, über die Elastizität der Membran diese innerhalb der Ringnut 15 festzulegen.

Fig. 4 und 5 zeigen zwei Ausbildungen der endgültigen Form des Kragens 9 durch Nachbearbeiten, wobei für die Verbindung einer Hydraulikleitung (nicht gezeigt) mit der Anschlußöffnung 11 einerseits eine Ausbildung als Anschlußstutzen mit Außengewinde und andererseits eine Ausbildung als Kupplungsstück gezeigt sind. Am gegenüberliegenden Boden 23 sind für den Kragen 25 mit der Öffnung 27 ebenfalls zwei unterschiedliche Formgebungen dargestellt. Die Öffnung 27 dient als Öffnung zum Befüllen des angrenzenden Innenraums des Speichergehäuses mit einem kompressiblen Druckmedium, beispielsweise Stickstoffgas. Nach Befüllen wird die Öffnung 27 druckdicht verschlossen, vorzugsweise durch Einpressen eines Verschlußkörpers in Form eines Metallkörpers, beispielsweise in Form einer Metallkugel oder eines Metallkegels, die durch beim Einpreßvorgang erfolgende oder anschließend durchgeführte plastische Verformung der anliegenden Werkstoffpartie des Kragens 25 eine formschlüssig gesicherte Dichtverbindung bildet.

## Patentansprüche

1. Verfahren zum Herstellen eines Membranspeichers mit einem Speichergehäuse aus Metall und mit einem elastisch nachgiebigen Trennglied, insbesondere in Form einer Membran (17), mit den folgenden Schritten:
a) in Drehung versetzen eines Rohrstückes (1) um dessen Längsachse (3),
b) Vorwärmen eines Endes (5) des Rohrstückes (1) für eine Umformung durch Warmeinziehen mittels Rollieren,
c) Rollieren des Rohrstückendes (5) durch Zustellen zumindest eines Drückwerkzeuges bei auf dessen Angriffsbereich gerichteter gezielter Erhitzung des Rohrstückes (1) zur Bildung eines Bodens (7) am Rohrstückende (5) mit einer Öffnung (11) an einem nach außen gestülpten Kragen (9),
d) Messen der Arbeitstemperatur im Angriffsbereich des Drückwerkzeuges während der Umformung und Regeln der Temperatur auf einen Wert für optimale Umformung,
e) Ausbilden einer inneren Ringnut (15) im mittleren Bereich des Rohrstückes (1),
f) Einsetzen einer mittels eines zugehörigen Spannringes (19) in der Ringnut (15) gehaltenen Membrananordnung (17),
g) Bilden eines zweiten Bodens (23) am zweiten Ende (21) des Rohrstückes (1) entsprechend den Schritten b) bis d).

2. Verfahren nach Anspruch 1, **dadurch gekennzeichnet, daß** die Ringnut (15) im mittleren Bereich (13) des Rohrstückes (1) durch Erhitzen dieses Bereiches und Rollieren ausgebildet wird.

3. Verfahren nach Anspruch 1, **dadurch gekennzeichnet, daß** die Ringnut (15) im mittleren Bereich (13) des Rohrstückes (1) durch spanende Bearbeitung ausgebildet wird.

4. Verfahren nach einem der Ansprüche 1 bis 3, **dadurch gekennzeichnet, daß** ein Rohrstück (1) aus einem leicht umformbaren Werkstoff, insbesondere einem kaltverformbaren Werkstoff, verwendet wird.

5. Verfahren nach Anspruch 4, **dadurch gekennzeichnet, daß** als Werkstoff eine Aluminiumlegierung verwendet wird.

6. Verfahren nach einem der Ansprüche 1 bis 5, **dadurch gekennzeichnet, daß** der Innenraum des Speichergehäuses zwischen der Membrananordnung (17) und einem Boden (23) des Speichergehäuses über die Öffnung (27) des Kragens (25) an diesem Boden (23) mit einem kompressiblen Druckmedium, vorzugsweise Stickstoffgas, befüllt wird und daß diese Öffnung (27) dann verschlossen wird.

7. Verfahren nach Anspruch 6, **dadurch gekennzeichnet, daß** das Verschließen der Öffnung (27) durch Einpressen eines metallischen Verschlußkörpers unter plastischer Verformung der Werkstoffpartie am betreffenden Kragen (25) durchgeführt wird.

## Claims

1. A method of producing a membrane accumulator with a metal case and a flexibly compliant separating component in particular in the form of a membrane (17), comprising the following steps:
a) Rotating a tubular piece (1) around its longitudinal axis (3).
b) preheating one end (5) of the tubular piece (1) for forming through heat retraction by strain-hardening.
c) Strain-hardening the end of the tubular piece (5) by applying at least one pressure tool, selectively heating the tubular piece (1) at the target area of said pressure tool in order to form a floor (7) at the end of the tubular piece (5) with an opening (11) at a collar, said collar (9) being turned outwards.
d) Measuring the working temperature in the target area of the pressure tool during forming and regulating the temperature to a level for optimum forming effect.
e) Forming an inner annular groove (15) in the central area of the tubular piece (1).
f) Introducing a membrane system (17), the said membrane system being sustained in the annular groove (15) by a corresponding clamping ring (19).
g) Forming a second floor (23) at the second end (21) of the tubular piece (1) according to steps b) and c).

2. A method according to Claim 1, **characterised in that** the annular grove (15) in the central area (13) of the tubular piece (1) is formed by heating and rolling this area.

3. A method according to Claim 1, **characterised in that** the annular groove (15) in the central area (13) of the tubular piece (1) is formed by machining.

4. A method according to one of the Claims 1 to 3, **characterised in that** a tubular piece (1) from an easily formable material, in particular a cold-workable material, is used.

5. A method according to Claim 4, **characterised in that** the material used is an aluminium alloy.

6. A method according to one of the Claims 1 to 5, **characterised in that** the inner space or the accumulator case is filled with a compressible pressure medium, preferably nitrogen, between the membrane system (17) and a floor (23) of the case through the opening (27) of the collar (25) in this floor (23) and that this opening (27) is subsequently closed.

7. A method according to Claim 6, **characterised in that** the opening (27) is closed by means of a metallic closing body being forced into position, the material at the respective collar (25) being plastically deformed.

## Revendications

1. Procédé dé fabrication d'un réservoir à membrane intégrée, formé par un caisson en métal et par un élément de séparation élastiquement flexible, en particulier sous forme d'une membrane (17), comprenant les étapes suivantes :
a) mise en rotation d'un morceau de tube (1) autour de l'axe longitudinal (3) de celui-ci,
b) préchauffage d'une extrémité (5) du morceau de tube (1) pour un formage par pénétration de chaleur au moyen d'un processus de roulage,
c) roulage de l'extrémité (5) du morceau de tube par l'application d'au moins un outil de compression, effectué sous chauffage oiblé du morceau de tube (1) dans la zone d'attaque de l'outil de compression, afin de former, au niveau de l'extrémité (5) du morceau de tube, un fond (7) muni d'un orifice (11), réalisé dans une collerette (9) emboutie par retournement vers l'extérieur,
d) mesure de la température de travail dans la zone d'attaque de l'outil de compression pendant le formage et réglage de la température à une valeur pour un formage optimal,
e) réalisation d'une rainure annulaire (15) intérieure dans la zone centrale du morceau de tube (1),
f) mise en place d'un système à membrane (17) maintenu dans la rainure annulaire (15) au moyen d'un anneau de serrage (19) correspondant,
g) formation d'un second fond (23) sur la deuxième extrémité (21) du morceau de tube (1) suivant les étapes b) à d).

2. Procédé selon la revendication 1, **caractérisé en ce que** la rainure annulaire (15) dans la zone centrale (13) du morceau de tube (1) est formée par chauffage de cette zone et par roulage.

3. Procédé selon la revendication 1, **caractérisé en ce que** la rainure annulaire (15) dans la zone centrale (13) du morceau de tube (1) est formée par un usinage avec enlèvement de copeaux.

4. Procédé selon l'une quelconque des revendications 1 à 3, **caractérisé en ce que** l'on utilise un morceau de tube (1) réalisé dans un matériau facilement déformable, en particulier un matériau pour formage à froid.

5. Procédé selon la revendication 4, **caractérisé en ce que** le matériau utilisé est un alliage d'aluminium.

6. Procédé selon l'une quelconque des revendications 1 à 5, **caractérisé en ce que** le volume intérieur du caisson du réservoir, compris entre le système à membrane (17) et un fond (23) du caisson, est rempli par l'intermédiaire de l'orifice (27) dans la collerette (25), réalisée sur ledit fond (23), avec un milieu sous pression compressible, de préférence de l'azote, et **en ce que** ledit orifice (27) est ensuite obturé.

7. Procédé selon la revendication 6, **caractérisé en ce que** l'orifice (27) est obturé par l'introduction forcée d'un corps d'obturation métallique au moyen d'une déformation plastique de la partie du matériau sur la collerette (25) concernée.
